# EUROPEAN PATENT APPLICATION

(11) **EP 4 589 971 A1**
(43) Date of publication of application: **23.07.2025**
(21) Application number: 23885900.3
(22) Date of filing: 17.03.2023
(51) Int. Cl.: H04N 23/57, H04N 23/55, H04M 1/02

(54) **ELECTRONIC APPARATUS COMPRISING CAMERA**

(30) Priority: 04.11.2022 KR 20220146564
(71) Applicant: Samsung Electronics Co., Ltd., Suwon-si, Gyeonggi-do 16677 (KR)
(72) Inventor: LEE, Seunghoon, Suwon-si Gyeonggi-do 16677 (KR); KIM, Yunsup, Suwon-si Gyeonggi-do 16677 (KR); AN, Sanghoon, Suwon-si Gyeonggi-do 16677 (KR)
(74) Representative: HGF
(86) International application number: PCT/KR2023/003602
(87) International publication number: WO 2024/096202

(57) **Abstract**

An electronic apparatus according to an embodiment comprises: a support member; a plate; a printed circuit board on the support member, the printed circuit board comprising a first through-hole; a camera on the printed circuit board; a bracket which surrounds the camera, and comprises a second through-hole aligned with respect to the first through-hole and a rib; and a camera decoration which comprises a guide hole coupled to the rib and a window aligned with respect to the camera, and is arranged to cover the camera in the plate; and a screw which passes through the first through-hole from the second through-hole, and is inserted into the support member. The outer circumference of the screw is spaced apart from the inner circumference of the second through-hole. Various other embodiments can be possible.

## Description

### [Technical Field]

Various embodiments of the present disclosure relate to an electronic device including a camera.

### [Background Art]

An electronic device may include a camera for capturing a still image and/or moving images. For example, the electronic device may include a front camera exposed to the front of the electronic device through one or more openings or a rear camera exposed through a rear cover. The rear cover may include a camera deco for covering the rear camera. A camera lens may capture light emitted from the subject.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may comprise a support, a plate, a printed circuit board (PCB), a camera, a bracket, a camera deco, and a screw. The plate may be spaced apart from a surface of the support. The PCB may include a first through hole. The PCB may be disposed on the surface of the support. The camera may be disposed on the PCB. The bracket may at least partially surround the camera on the PCB. The bracket may include a second through hole and a rib. The second through hole may align with the first through hole of the PCB. The rib may protrude toward the plate. The camera deco may include a guide hole and a window. The guide hole may be coupled to the rib of the bracket. The window may align with the camera. The camera deco may be disposed to cover the camera in the plate. The screw may couple the bracket on the PCT by passing through the first through hole of the PCB from the second through hole of the bracket and being coupled to the support. An outer surface of the screw may be spaced apart from an inner surface of the second through hole of the bracket.

According to an embodiment, an electronic device may comprise a housing, a printed circuit board (PCB), a camera, a camera deco, a bracket, and a screw. The housing may include a support. The PCB may include a first through hole. The PCB may be disposed on the support. The camera may be disposed on the PCB. The camera deco may include a guide hole and a window. The window may align with the camera. The camera deco may cover the camera. The bracket may include a second through hole and a rib. The second through hole may align with the first through hole of the PCB. The rib may be coupled to the guide hole of the camera deco. The bracket may at least partially surround the camera on the PCB. The screw may include a first portion and a second portion. The first portion may be positioned in the first through hole of the PCB. The second portion may extend from the first portion of the screw. The second portion may be positioned in the second through hole. The first portion of the screw may pass through the first through hole of the PCB. The first portion may be coupled to a structure of the support. A diameter of the second portion may be smaller than a diameter of the second through hole.

### [Description of the Drawings]

FIG. 1 is a block diagram of an electronic device in a network environment according to an embodiment.
FIG. 2 is a diagram indicating an exemplary electronic device.
FIG. 3 is an exploded perspective view of an exemplary electronic device.
FIG. 4A is a perspective view of an exemplary electronic device.
FIG. 4B is a portion of an exploded perspective view of the electronic device of FIG. 4A.
FIG. 5 is a cross-sectional view cut along line A-A' of the electronic device of FIG. 4A.
FIG. 6A indicates a camera and a bracket disposed on a printed circuit board.
FIG. 6B indicates a figure of a screw being inserted.
FIG. 6C is a cross-sectional view cut along line B-B' of an electronic device of FIG. 6A.
FIG. 7A indicates a figure of a rib being coupled to a guide hole.
FIG. 7B indicates a bracket.
FIG. 7C indicates a camera deco.
FIG. 7D indicates a cover of a camera deco.
FIG. 8A is a flowchart indicating an assembly process of an exemplary electronic device.
FIGS. 8B, 8C, and 8D indicate an exemplary electronic device in the assembly process of FIG. 8A.

### [Mode for Invention]

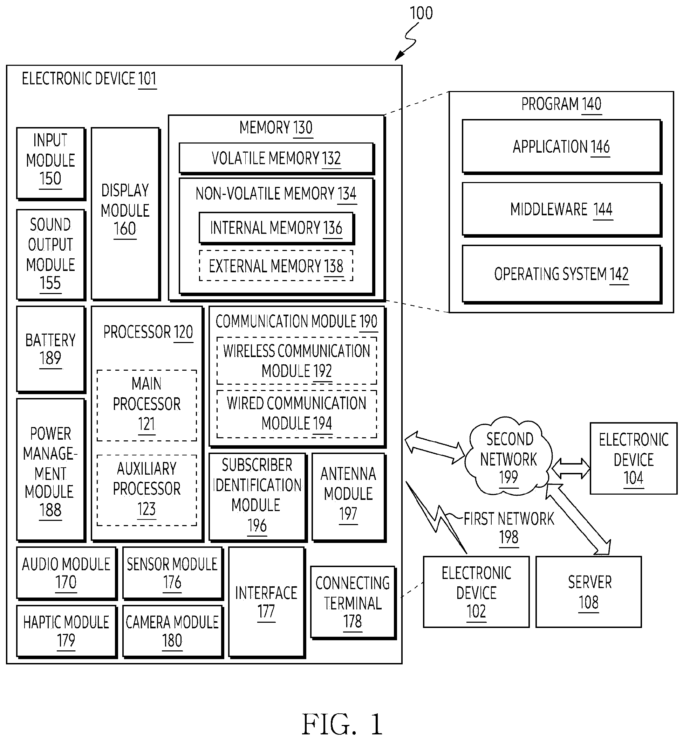

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

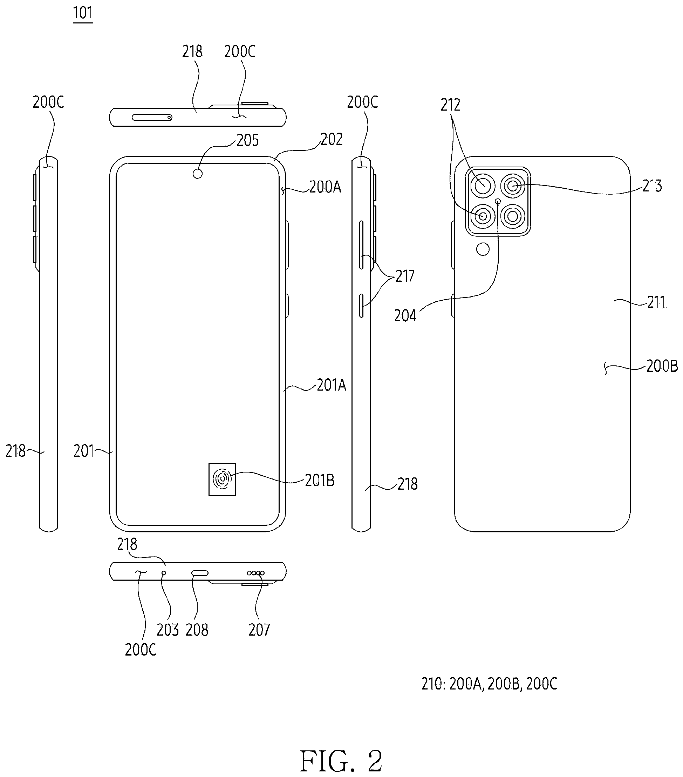

FIG. 2 is a diagram indicating an exemplary electronic device 101.

Referring to FIG. 2, the electronic device 101 according to an embodiment may include a housing 210 that forms an exterior of the electronic device 101. For example, the housing 210 may include a first surface (or a front surface) 200A, a second surface (or a rear surface) 200B, and a third surface (or a side surface) 200C surrounding a space between the first surface 200A and the second surface 200B. According to an embodiment, the housing 210 may refer to a structure forming at least a portion of the first surface 200A, the second surface 200B, and/or the third surface 200C.

The electronic device 101 according to an embodiment may include a substantially opaque first plate 211. According to an embodiment, the first plate 211 may form at least a portion of the second surface 200B. According to an embodiment, the first plate 211 may be formed by coated or colored glass, ceramic, polymer, metal (e.g., aluminum, stainless steel (STS), or magnesium), or a combination of at least two of the materials.

The electronic device 101 according to an embodiment may include a substantially transparent second plate 202. According to an embodiment, the second plate 202 may form at least a portion of the first surface 200A. According to an embodiment, the second plate 202 may include, for example, a glass plate or a polymer plate including various coating layers, but is not limited thereto.

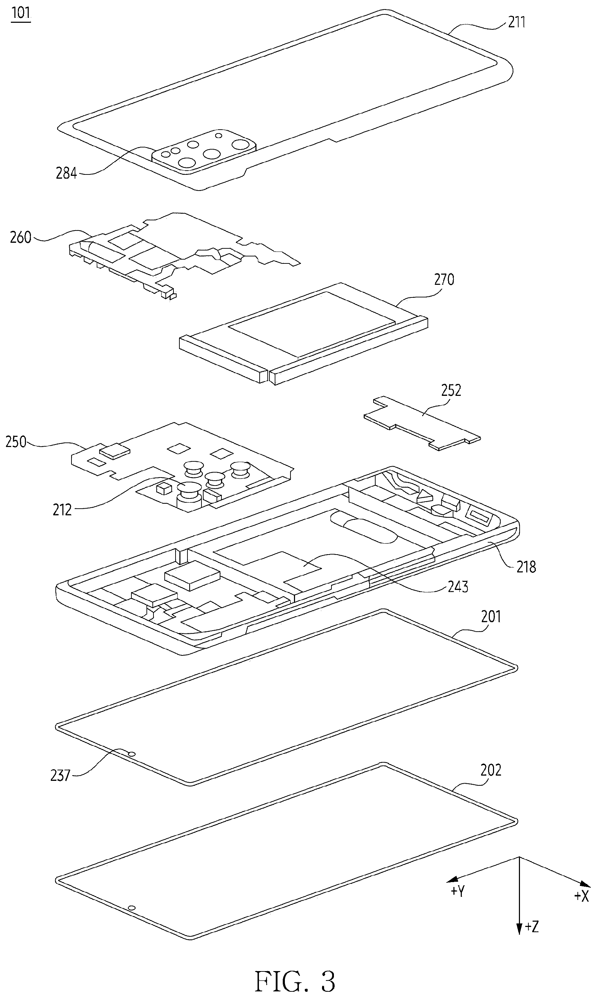

The electronic device 101 according to an embodiment may include a third plate (or a side member) (e.g., a third plate 218 of FIG. 3). According to an embodiment, the third plate 218 may form at least a portion of the third surface 200C of the electronic device 101 by being coupled with the second plate 202 and/or the first plate 211. For example, the third plate 218 may entirely form the third surface 200C of the electronic device 101. For example, the third plate 218 may form the third surface 200C of the electronic device 101 with the second plate 202 and/or the first plate 211.

Unlike the illustrated embodiment, in case that the third surface 200C of the electronic device 101 is partially formed by the second plate 202 and/or the first plate 211, the second plate 202 and/or the first plate 211 may include a region seamlessly extending by being bent toward the first plate 211 and/or the second plate 202 from its edge. The extended region of the second plate 202 and/or the first plate 211 may be positioned, for example, at both ends of a long edge of the electronic device 101, but it is not limited to the example described above.

According to an embodiment, the third plate 218 may include metal and/or polymer. According to an embodiment, the first plate 211 and the third plate 218 may be integrally formed and may include the same material (e.g., a metallic material such as aluminum), but are not limited thereto. For example, the first plate 211 and the third plate 218 may be formed in a separate configuration and/or may include different materials.

According to an embodiment, the electronic device 101 may include at least one of a display 201, audio modules 203, 204, and 207, a sensor module (not shown), camera modules 205, 212, and 213, a key input device 217, a light emitting element (not shown), and/or a connector hole 208. According to an embodiment, the electronic device 101 may omit at least one (e.g., the key input device 217 or the light emitting element (not shown)) of the components or may additionally include another component.

According to an embodiment, the display 201 (e.g., the display module 160 of FIG. 1) may be visually exposed through a significant portion of the second plate 202. For example, at least a portion of the display 201 may be seen through the second plate 202 forming the first surface 200A. According to an embodiment, the display 201 may be disposed on a back surface of the second plate 202.

According to an embodiment, an outer periphery shape of the display 201 may be formed substantially the same as an outer periphery shape of the second plate 202 adjacent to the display 201. According to an embodiment, in order to expand a region in which the display 201 is visually exposed, a distance between an outer periphery of the display 201 and an outer periphery of the second plate 202 may be formed substantially the same.

According to an embodiment, the display 201 (or the first surface 200A of the electronic device 101) may include a screen display region 201A. According to an embodiment, the display 201 may provide visual information to a user via the screen display region 201A. In the illustrated embodiment, when the first surface 200A is viewed from a front, it is illustrated that the screen display region 201A is spaced apart from an outer periphery of the first surface 200A and positioned in an inner side of the first surface 200A, but is not limited thereto. According to an embodiment, when the first surface 200A is viewed from the front, at least a portion of an edge of the screen display region 201A may substantially coincide with an edge of the first surface 200A (or the second plate 202).

According to an embodiment, the screen display region 201A may include a sensing region 201B configured to obtain biometric information of a user. Herein, a meaning of "the screen display region 201A includes the sensing region 201B" may be understood to mean that at least a portion of the sensing region 201B may be overlapped with the screen display region 201A. For example, the sensing region 201B, like another area of the screen display region 201A, may mean an area capable of displaying visual information by the display 201 and additionally obtaining the biometric information (e.g., fingerprint) of the user). According to an embodiment, the sensing region 201B may be formed in the key input device 217.

According to an embodiment, the display 201 may include a region where the first camera module 205 (e.g., the camera module 180 of FIG. 1) is positioned. According to an embodiment, an opening may be formed in the region of the display 201, and the first camera module 205 (e.g., a punch hole camera) may be at least partially disposed in the opening to face the first surface 200A. For example, the screen display region 201A may surround at least a portion of an edge of the opening. According to an embodiment, the first camera module 205 (e.g., an under display camera (UDC)) may be disposed under the display 201 to overlap the region of the display 201. For example, the display 201 may provide visual information to the user via the region, and additionally, the first camera module 205 may obtain an image corresponding to a direction toward the first surface 200A via the region of the display 201.

According to an embodiment, the display 201 may be coupled or disposed adjacent to touch sensing circuitry, a pressure sensor capable of measuring an intensity (pressure) of a touch, and/or a digitizer that detects a magnetic field type stylus pen.

According to an embodiment, the audio modules 203, 204, and 207 (e.g., the audio module 170 of FIG. 1) may include microphone holes 203 and 204, and a speaker hole 207.

According to an embodiment, the microphone holes 203 and 204 may include the first microphone hole 203 formed in a partial region of the third surface 200C and the second microphone hole 204 formed in a partial region of the second surface 200B. A microphone (not shown) for obtaining external sound may be disposed inside the microphone holes 203 and 204. The microphone may include a plurality of microphones to detect a direction of sound.

According to an embodiment, the second microphone hole 204 formed in the partial region of the second surface 200B may be disposed adjacent to the camera modules 205, 212, and 213. For example, the second microphone hole 204 may obtain sound according to an operation of the camera modules 205, 212, and 213. However, it is not limited thereto.

According to an embodiment, the speaker hole 207 may include the external speaker hole 207 and a call receiver hole (not shown). The external speaker hole 207 may be formed on a portion of the third surface 200C of the electronic device 101. According to an embodiment, the external speaker hole 207 may be implemented as one hole with the microphone hole 203. Although not illustrated, the call receiver hole (not shown) may be formed on another portion of the third surface 200C. For example, the call receiver hole may be formed on an opposite side of the external speaker hole 207 in the third surface 200C. For example, based on the illustration of FIG. 2, the external speaker hole 207 may be formed in the third surface 200C corresponding to a lower end of the electronic device 101, and the call receiver hole may be formed in the third surface 200C corresponding to an upper end of the electronic device 101. However, it is not limited thereto, and according to an embodiment, the call receiver hole may be formed at a position other than the third surface 200C. For example, the call receiver hole may be formed by a separated space between the second plate 202 (or the display 201) and the third plate 218.

According to an embodiment, the electronic device 101 may include at least one speaker (not shown) configured to output sound to the outside of the housing 210 via the external speaker hole 207 and/or the call receiver hole (not shown).

According to an embodiment, the sensor module (not shown) (e.g., the sensor module 176 of FIG. 1) may generate an electrical signal or a data value corresponding to an internal operating state or an external environmental state of the electronic device 101. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 (e.g., the camera module 180 of FIG. 1) may include the first camera module 205 disposed to face the first surface 200A of the electronic device 101, the second camera module 212 disposed to face the second surface 200B, and the flash 213.

According to an embodiment, the second camera module 212 may include a plurality of cameras (e.g., a dual camera, a triple camera, or a quad camera). However, the second camera module 212 is not necessarily limited to including a plurality of cameras, and may include one camera.

According to an embodiment, the first camera module 205 and the second camera module 212 may include one lens or a plurality of lenses, an image sensor, and/or an image signal processor.

According to an embodiment, the flash 213 may include, for example, a light emitting diode or a xenon lamp. According to an embodiment, two or more lenses (an infrared camera, wide-angle and telephoto lenses) and image sensors may be disposed on a surface of the electronic device 101.

According to an embodiment, the key input device 217 (e.g., the input module 150 of FIG. 1) may be disposed on the third surface 200C of the electronic device 101. According to an embodiment, the electronic device 101 may not include a portion or all of the key input device 217, and the key input device 217 that is not included may be implemented in another form, such as a soft key, on the display 201.

According to an embodiment, the connector hole 208 may be formed in the third surface 200C of the electronic device 101 to accommodate a connector of an external device. In the connector hole 208, a connection terminal (e.g., the connection terminal 178 of FIG. 1) electrically connected to the connector of the external device may be disposed. The electronic device 101 according to an embodiment may include an interface module (e.g., the interface 177 of FIG. 1) for processing an electrical signal transmitted and received via the connection terminal.

According to an embodiment, the third plate 218 may include a vent hole 206. For example, air outside the housing 210 may be introduced into the housing 210 via the vent hole 206. For example, air inside the housing 210 may flow out of the housing 210 via the vent hole 206.

According to an embodiment, the electronic device 101 may include a light emitting element (not shown). For example, the light emitting element (not shown) may be disposed on the first surface 200A of the housing 210. The light emitting element (not shown) may provide state information of the electronic device 101 in an optical form. According to an embodiment, the light emitting element (not shown) may provide a light source that is linked to an operation of the first camera module 205. For example, the light emitting element (not shown) may include an LED, an IR LED, and/or a xenon lamp.

FIG. 3 is an exploded perspective view of an exemplary electronic device.

Hereinafter, an overlapping description of a configuration having the same reference numeral as the above-described configuration will be omitted.

Referring to FIG. 3, an electronic device 101 according to an embodiment may include a third plate 218, a support 243, a first printed circuit board 250, a second printed circuit board 252, a cover plate 260, and a battery 270.

According to an embodiment, the electronic device 101 may include the third plate 218 forming an exterior (e.g., the third surface 200C of FIG. 2) of the electronic device 101 and the support 243 extending inwardly from the third plate 218. According to an embodiment, the third plate 218 and the support 243 may be disposed between a display 201 and a first plate 211. For example, the third plate 218 may surround a space between a first plate 211 and a second plate 202 (and/or the display 201). For example, the support 243 may extend from the third plate 218 in the space.

According to an embodiment, the support 243 may support or accommodate other components included in the electronic device 101. For example, the display 201 may be disposed on a surface of the support 243 facing in a direction (e.g., a +z direction), and the display 201 may be supported by the support 243. For example, the first printed circuit board 250, the second printed circuit board 252, the battery 270, and a second camera module 212 may be disposed on another surface of the support 243 facing a direction (e.g., a -z direction) opposite to the direction. The first printed circuit board 250, the second printed circuit board 252, the battery 270, and the second camera module 212 may be respectively seated in a recess defined by the third plate 218 and/or the support 243.

According to an embodiment, the first printed circuit board 250, the second printed circuit board 252, and the battery 270 may be coupled to the support 243, respectively. For example, the first printed circuit board 250 and the second printed circuit board 252 may be fixedly disposed in the support 243 via a coupling member such as a screw. For example, the battery 270 may be fixedly disposed in the support 243 via an adhesive member (e.g., a double-sided tape). However it is not limited by the above-described example.

According to an embodiment, the cover plate 260 may be disposed between the first printed circuit board 250 and the first plate 211. According to an embodiment, the cover plate 260 may be disposed on the first printed circuit board 250. For example, the cover plate 260 may be disposed on a surface facing the -z direction of the first printed circuit board 250.

According to an embodiment, the cover plate 260 may at least partially overlap the first printed circuit board 250 with respect to a z-axis. According to an embodiment, the cover plate 260 may cover at least a partial region of the first printed circuit board 250. Accordingly, the cover plate 260 may protect the first printed circuit board 250 from a physical impact or prevent detachment of a connector coupled to the first printed circuit board 250.

According to an embodiment, the cover plate 260 may be fixedly disposed in the first printed circuit board 250 via a coupling member (e.g., a screw), or may be coupled to the support 243 together with the first printed circuit board 250 via the coupling member.

According to an embodiment, the display 201 may be disposed between the support 243 and the second plate 202. For example, the second plate 202 may be disposed in a side (e.g., the +z direction) of the display 201, and the support 243 may be disposed in another side (e.g., the -z direction).

According to an embodiment, the second plate 202 may be coupled to the display 201. For example, the second plate 202 and the display 201 may be adhered to each other via an optical adhesive member (e.g., optically clear adhesive (OCA) or optically clear resin (OCR)) interposed therebetween.

According to an embodiment, the second plate 202 may be coupled to the third plate 218. For example, the second plate 202 may include an outer periphery portion extending outside the display 201 when viewed in the z-axis direction, and may be adhered to the third plate 218 via an adhesive member (e.g., a waterproof tape) disposed between the outer periphery portion of the second plate 202 and the third plate 218. However, it is not limited by the above-described example.

According to an embodiment, the first printed circuit board 250 and/or the second printed circuit board 252 may be equipped with a processor (e.g., the processor 120 of FIG. 1), memory (e.g., the memory 130 of FIG. 1), and/or an interface (e.g., the interface 177 of FIG. 1). The processor may include, for example, one or more of a central processing unit, an application processor, a graphics processing unit, an image signal processor, a sensor hub processor, or a communication processor. The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 101 to an external electronic device, and may include a USB connector, an SD card/MMC connector, or an audio connector. According to an embodiment, the first printed circuit board 250 and the second printed circuit board 252 may be operably or electrically connected to each other via a connecting member (e.g., a flexible printed circuit board).

According to an embodiment, the battery 270 (e.g., the battery 189 of FIG. 1) may supply power to at least one component of the electronic device 101. For example, the battery 270 may include a rechargeable battery or a fuel cell. At least a portion of the battery 270 may be disposed on substantially the same plane as the first printed circuit board 250 and/or the second printed circuit board 252.

The electronic device 101 according to an embodiment may include an antenna module (not shown) (e.g., the antenna module 197 of FIG. 1). According to an embodiment, the antenna module may be disposed between the first plate 211 and the battery 270. The antenna module may include, for example, a near field communication (NFC) antenna, a wireless charging antenna, and/or a magnetic secure transmission (MST) antenna. The antenna module may, for example, perform short-range communication with an external device, or wirelessly transmit and receive power with the external device.

According to an embodiment, a first camera module 205 (e.g., a front camera) may be disposed in at least a portion of the support 243 so that a lens may receive external light via a partial region (e.g., a camera region 237) of the second plate 202 (e.g., the front surface 200A of FIG. 2).

According to an embodiment, the second camera module 212 (e.g., a rear camera) may be disposed between the support 243 and the first plate 211. According to an embodiment, the second camera module 212 may be electrically connected to the first printed circuit board 250 via a connecting member (e.g., a connector). According to an embodiment, the second camera module 212 may be disposed such that the lens may receive external light via a camera region 284 of the first plate 211 of the electronic device 101.

According to an embodiment, the camera region 284 may be formed in a surface (e.g., the rear surface 200B of FIG. 2) of the first plate 211. According to an embodiment, the camera region 284 may be formed at least partially transparent so that external light may be incident on the lens of the second camera module 212. According to an embodiment, at least a portion of the camera region 284 may protrude from the surface of the first plate 211 at a predetermined height. However, it is not limited thereto, and according to an embodiment, the camera region 284 may form substantially the same plane as the surface of the first plate 211.

According to an embodiment, a housing 210 of the electronic device 101 may mean a configuration or structure forming at least a portion of the exterior of the electronic device 101. In this respect, at least a portion of the second plate 202, the third plate 218, and/or the first plate 211 forming the exterior of the electronic device 101 may be referred to as the housing 210 of the electronic device 101.

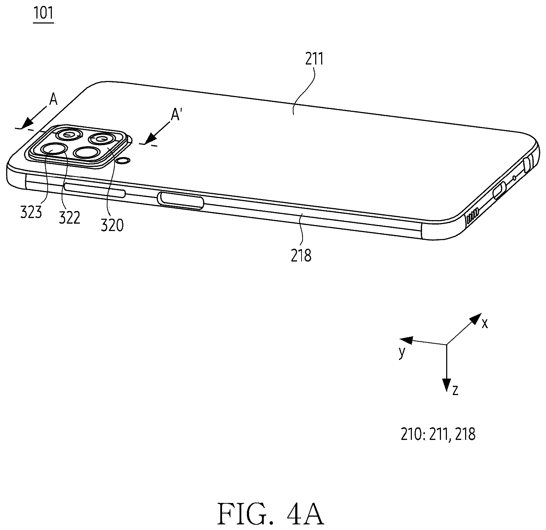

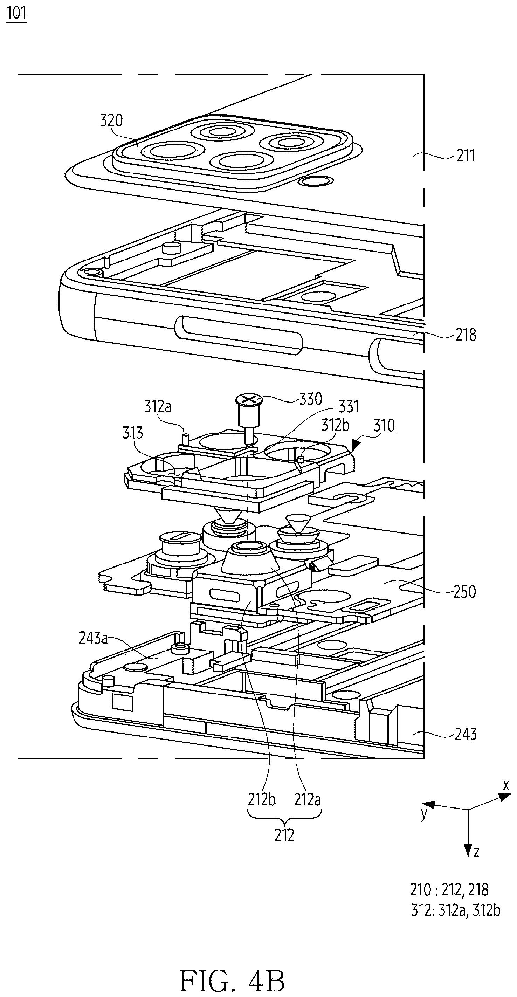

FIG. 4A is a perspective view of an exemplary electronic device 101. FIG. 4B is a portion of an exploded perspective view of an electronic device 101 of FIG. 4A.

Referring to FIGS. 4A and 4B, an electronic device 101 according to an embodiment may include a housing 210, a support 243, a printed circuit board 250, a camera 212 (e.g., the camera module 180 of FIG. 1), a bracket 310, a camera deco 320, and a screw 330.

According to an embodiment, the housing 210 may include a first plate 211 (e.g., the first plate 211 of FIG. 3), a second plate 202 (e.g., the second plate 202 of FIG. 3), and a third plate 218 (e.g., the third plate 218 of FIG. 3) forming an exterior of the electronic device 101. The first plate 211 and the second plate 202 may face different directions. For example, the first plate 211 may face a first direction (e.g., a -z direction). For example, the second plate 202 may face a second direction (e.g., a +z direction) opposite to the first direction. For example, the first plate 211 may be referred to as a rear cover. For example, the second plate 202 may be referred to as a front cover. For example, the third plate 218 may be referred to as a side member (e.g., a side member). For example, the first plate 211, the second plate 202, and the third plate 218 may form an inner space. Various components of the electronic device 101 may be disposed in the inner space.

According to an embodiment, the support 243 may be disposed in the inner space. For example, the support 243 may extend from the third plate 218 into the housing 210. According to an embodiment, the support 243 may support components of the electronic device 101. For example, the printed circuit board 250 and/or a battery (e.g., the battery 270 of FIG. 3) may be disposed on the support 243. The printed circuit board 250 and/or the battery may be disposed at a designated position on the support 243. According to an embodiment, the first plate 211 may be spaced apart from a surface 243a of the support 243. The printed circuit board 250, the camera 212, the bracket 310, and the screw 330 may be disposed between the first plate 211 and the support 243.

According to an embodiment, the printed circuit board 250 may be disposed on a surface 243a of the support 243. The printed circuit board 250 may include a plurality of conductive layers and a plurality of non-conductive layers alternately laminated with the plurality of conductive layers. The printed circuit board 250 may provide an electrical connection between various electronic components of the electronic device 101 using wires and conductive vias formed in the conductive layer. For example, the camera 212 may be electrically connected to a processor (e.g., the processor 120 of FIG. 1) via the printed circuit board 250.

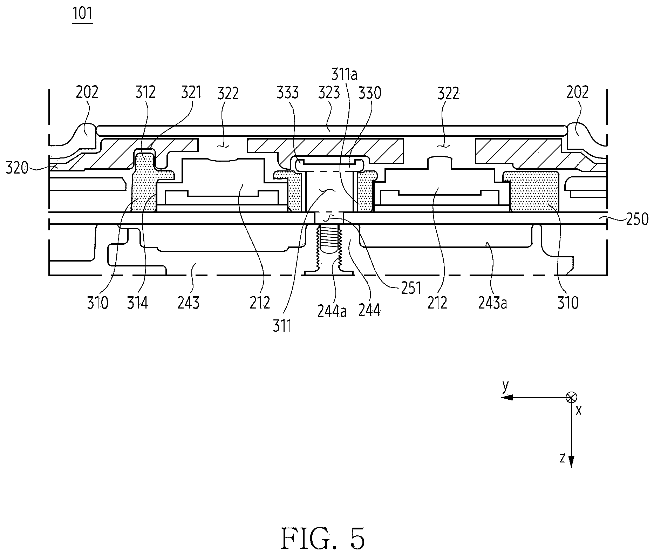

According to an embodiment, the printed circuit board 250 may include a first through hole (e.g., a first through hole 251 of FIG. 5). The first through hole 251 may align with a second through hole 311 of the bracket 310 to be described later. The screw 330 may be inserted into the first through hole 251 and the second through hole 311. The printed circuit board 250 may be fastened at a designated position in the housing 210 via the screw 330 coupled to the support 243 via the first through hole 251 and the second through hole 311.

According to an embodiment, the camera 212 may be disposed on the printed circuit board 250. The camera 212 may face a direction (e.g., the -z direction) from the second plate (e.g., the second plate 202 of FIG. 3) toward the first plate 211. The camera 212 may be at least partially surrounded by the bracket 310 on the printed circuit board 250. The camera 212 may include a lens 212a and a shield can 212b. For example, the lens 212a may obtain light emitted from a subject that is target of image shooting. For example, the lens 212a may include one or more lenses. The lens 212a may include a wide-angle lens or a telephoto lens, but is not limited thereto. The shield can 212b may be configured to protect the lens 212a and shield an electromagnetic wave emitted from the camera 212. For example, the shield can 212b may surround at least a portion of the lens 212a. At least a portion of the lens 212a may be exposed on the shield can 212b. The electronic device 101 according to an embodiment may include a plurality of cameras disposed at different positions.

According to an embodiment, the bracket 310 may at least partially surround the camera 212 on the printed circuit board 250. The bracket 310 may fasten the camera 212 at a designated position by being coupled on the printed circuit board 250 in a state in which the camera 212 is at least partially surrounded. For example, the bracket 310 may include an accommodation space for surrounding at least a portion of the camera 212, and the camera 212 may be disposed in the accommodation space. The bracket 310 may include an opening 313 formed at a position corresponding to the lens 212a of the camera 212 disposed in the accommodation space. The lens 212a may be configured to obtain light emitted from the subject via the opening 313.

According to an embodiment, the bracket 310 may be disposed on the printed circuit board 250. The bracket 310 may be coupled to the printed circuit board 250 by the screw 330 in a state of surrounding the camera 212. According to an embodiment, the bracket 310 may include the second through hole 311 aligned with respect to the first through hole 251. For example, when viewing the bracket 310 in a direction from the bracket 310 toward the printed circuit board 250, the first through hole 251 and the second through hole 311 may at least partially overlap. According to an embodiment, the camera 212 may not be directly connected to the support 243, but may be fastened by the bracket 310 connected to the support 243. According to an embodiment, the bracket 310 may be coupled to the support 243 by the screw 330 in a state of surrounding the camera 212. For example, the screw 330 may couple the bracket 310 and/or the printed circuit board 250 to the support 243.

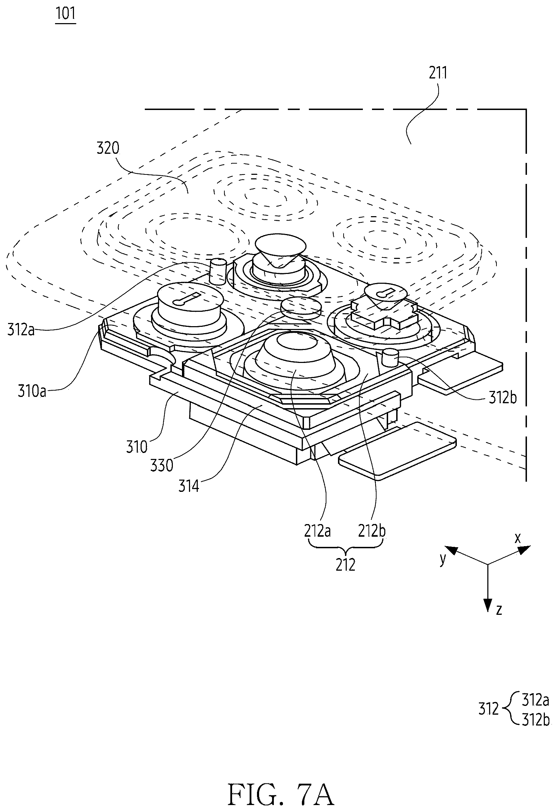

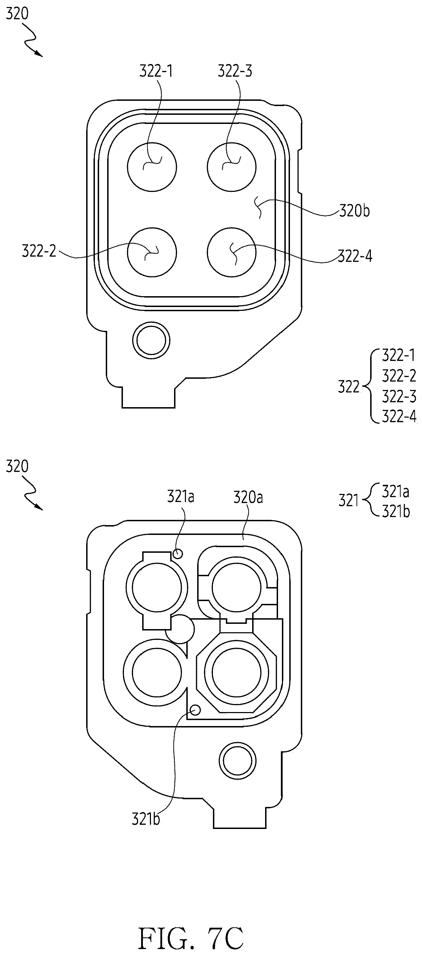

According to an embodiment, the bracket 310 may include a rib 312 protruding toward the first plate 211. The rib 312 may be disposed on a surface (e.g., the surface 310a of FIG. 7A) of the bracket 310 facing the first plate 211. The rib 312 may be coupled to a guide hole (e.g., a guide hole 321 of FIG. 5) of the camera deco 320 to be described later. The rib 312 may include ribs 312a and 312b disposed at different positions. For example, the rib 312 may include the first rib 312a and the second rib 312b spaced apart from the first rib 312a. The first rib 312a may be inserted into a first guide hole (e.g., a first guide hole 321a of FIG. 7C) of a surface (e.g., a surface 320a of FIG. 7C) facing the bracket 310 of the camera deco 320. The second rib 312b may be inserted into a second guide hole (e.g., a second guide hole 321b of FIG. 7C) of the surface (e.g., the surface 320a of FIG. 7C) facing the bracket 310 of the camera deco 320. However, the first rib 312a and the second rib 312b are exemplary and are not limited thereto. According to an embodiment, the rib 312 may provide a positional relation between the bracket 310 and the camera deco 320 by being inserted into the guide hole 321.

According to an embodiment, the camera deco 320 may be disposed in the first plate 211. For example, in a state in which the first plate 211 is coupled to the third plate 218, the camera deco 320 may cover the camera 212 by being disposed to be aligned with the camera 212 disposed in the housing 210. According to an embodiment, the camera deco 320 may include a window 322 aligned with the lens 212a of the camera 212. The number of the windows 322 may correspond to the number of the cameras 212. For example, in case that the electronic device 101 includes four cameras, the camera deco 320 may include four openings corresponding to the four cameras, respectively. However, it is not limited thereto. According to an embodiment, the camera deco 320 may include a cover (e.g., a cover 323 of FIG. 5) covering the window 322. The cover 323 may be configured to pass through light emitted from a subject positioned outside the electronic device 101. For example, the cover 323 may be substantially transparent. The lens 212a may be configured to obtain light emitted from a subject via the cover 323 and the window 322.

According to an embodiment, the screw 330 may be inserted into the first through hole 251 and the second through hole 311, overlapping each other. For example, the screw 330 may be inserted from the second through hole 311 of the bracket 310 into the first through hole 251 aligned with the second through hole 311. A length of the screw 330 may be longer than a length of the first through hole 251 and a length of the second through hole 311.

The electronic device 101 according to an embodiment may have a positional relation between the camera 212 and the camera deco 320 via the rib 312 of the bracket 310 and the guide hole 321 of the camera deco 320 that are coupled to each other. For example, in a process of assembling the electronic device 101, the camera 212 and the window 322 corresponding to the camera 212 may be aligned with each other due to the positional relation between the camera 212 and the camera deco 320. For example, the first plate 211 on which the camera deco 320 is disposed may guide a position of the bracket 310 via the rib 312 coupled to the guide hole 321. According to an embodiment, the camera 212 may be disposed at a designated position in the housing 210 by aligning the camera 212 and the window 322 of the camera deco 320. An angle of view of the lens 212a may be aligned with the window 322 of the camera deco 320 by disposing the camera 212 at the designated position in the housing 210. The electronic device 101 according to an embodiment may reduce eccentricity of the camera 212 in which a center of the lens 212a and a center of the window 322 are misaligned.

FIG. 5 is a cross-sectional view cut along line A-A' of the electronic device 101 of FIG. 4A.

Referring to FIG. 5, a support 243, a printed circuit board 250, a bracket 310, a camera 212, a camera deco 320, and/or a cover 323 may be sequentially disposed in a direction from the support 243 toward a first plate 211.

According to an embodiment, the camera 212 may be at least partially surrounded by the bracket 310. For example, the bracket 310 may move together with the camera 212 by being coupled to at least a portion of a shield can 212b. For example, the bracket 310 may include a partition wall 314 for surrounding at least a portion of the camera 212. The partition wall 314 may form a space surrounded by the partition wall 314. The shield can 212b may be disposed in the space surrounded by the partition wall 314. For example, the shield can 212b may be coupled to the space surrounded by the partition wall 314 in an interference fit manner, but is not limited thereto. When the bracket 310 moves, the camera 212 coupled to the space may move together with the bracket 310.

According to an embodiment, a screw 330 may be coupled to the bracket 310, the printed circuit board 250, and/or the support 243. For example, the screw 330 may pass through a first through hole 251 from a second through hole 311 of the bracket 310 and may be coupled to the support 243. The support 243 may include a structure 244 coupled to the screw 330. For example, the structure 244 may protrude in a direction (e.g., a -z direction) facing the first plate 211 from a surface 243a of the support 243 and may be coupled to the screw 330. However, it is not limited thereto. According to an embodiment, the printed circuit board 250 may be fastened on the support 243 via the screw 330 coupled to the support 243.

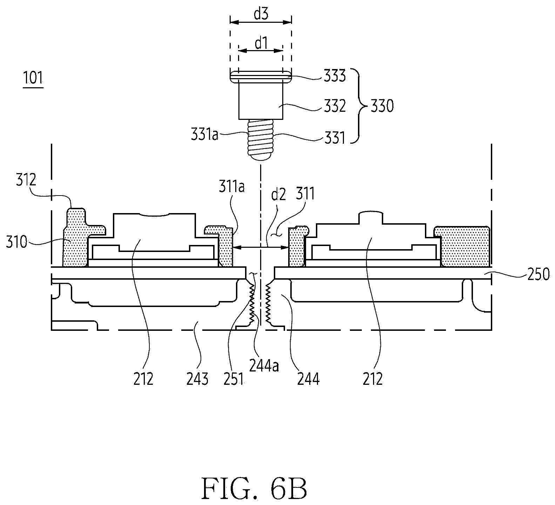

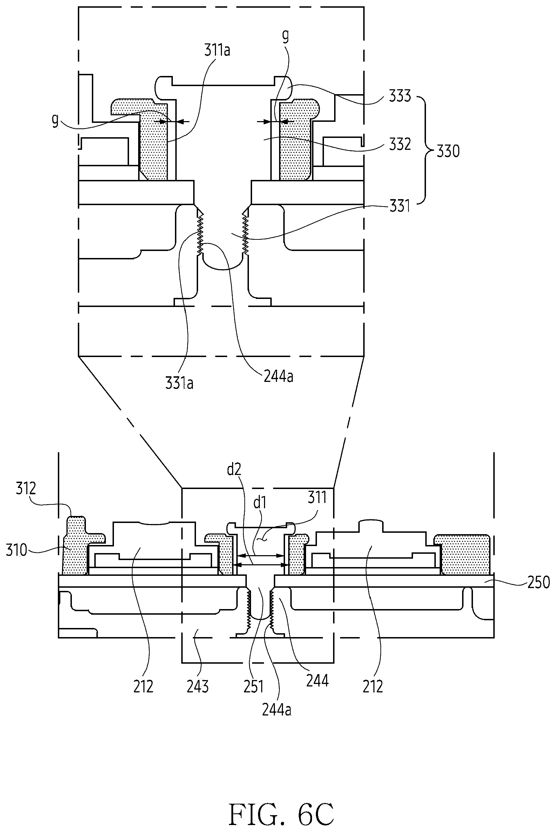

According to an embodiment, a portion (e.g., a first portion 331 of FIG. 6B) of an outer surface of the screw 330 may be coupled to the support 243, and another portion (e.g., a second portion 332 of FIG. 6B) of the outer surface of the screw 330 may be spaced apart from an inner surface 311a of the second through hole 311. For example, a gap (e.g., a gap g of FIG. 6C) may be formed between the inner surface 311a of the second through hole 311 and the other portion of the outer surface of the screw 330. The gap g may be referred to as a spaced distance between the second portion 332 of the screw 330 and the inner surface 311a of the second through hole 311. The gap g may be constant. In a state in which the bracket 310 is not coupled to the camera deco 320, a position of the bracket 310 may be changed based on the gap g between the screw 330 and the second through hole 311.

For example, the bracket 310 may be disposed on the printed circuit board 250 through the screw 330 inserted into the first through hole 251 and the second through hole 311. The screw 330 may include a flange 333 to prevent the bracket 310 from deviating on the printed circuit board 250. For example, a diameter (e.g., a diameter d3 of FIG. 6B) of the flange 333 may be larger than a diameter (e.g., a diameter d2 of FIG. 6B) of the second through hole 311. The bracket 310 may not move in the z-axis direction on the printed circuit board 250 by the screw 330.

According to an embodiment, the bracket 310 may be movable by the gap g between the screw 330 and the second through hole 311 on an xy plane. For example, since the inner surface 311a of the second through hole 311 and a portion of the outer surface (e.g., the outer surface of the second portion 332) of the screw 330 are spaced apart from each other, the bracket 310 may be movable by the gap g between the inner surface 311a of the second through hole 311 and the portion of the screw 330 in a state in which the screw 330 is inserted. Since the bracket 310 moves together with the camera 212 when the bracket 310 is moved, when the position of the bracket 310 is adjusted, a position of the camera 212 may also be adjusted.

According to an embodiment, the bracket 310 may include a rib 312 coupled to a guide hole 321 of the camera deco 320. The rib 312 may protrude toward the first plate 211 from a surface 310a of the bracket 310 facing the first plate 211. The guide hole 321 may be disposed at a position corresponding to the rib 312. A shape of the guide hole 321 and a shape of the rib 312 may correspond to each other. The rib 312 may be coupled to the guide hole 321 in the interference fit manner, but is not limited thereto. The camera deco 320 and the bracket 310 may move together in a state in which the rib 312 is coupled to the guide hole 321. For example, when a position of the first plate 211 in which the camera deco 320 is disposed is adjusted, the position of the bracket 310 may also be adjusted.

According to an embodiment, the first plate 211 may align the camera 212 with a window 322 of the camera deco 320 on the printed circuit board 250 via the rib 312 coupled to the guide hole 321 and the gap g between the screw 330 and the second through hole 311. When the camera 212 is aligned with the window 322, a center of a lens 212a and a center of the window 322 may substantially coincide. For example, when the first plate 211 is coupled to the third plate 218 during an assembly process of the first plate 211, the second plate 202, and the third plate 218, the rib 312 may be coupled to the guide hole 321. In a state in which the rib 312 and the guide hole 321 are coupled, the first plate 211 may align the camera 212 with the window 322 of the camera deco 320 on the printed circuit board 250 via the rib 312 coupled to the guide hole 321 and the gap g between the screw 330 and the second through hole 311. For example, by adjusting the position of the first plate 211, a position of the camera deco 320 disposed in the first plate 211 may be adjusted. As the position of the camera deco 320 is adjusted by the first plate 211, the position of the bracket 310 may be adjusted by the rib 312 coupled to the guide hole 321. Since the bracket 310 may move together with the camera 212, the first plate 211 may align the camera 212 with the window 322 of the camera deco 320. For example, by aligning the camera 212 with the window 322 of the camera deco 320, an angle of view of the lens 212a may be aligned with the window 322.

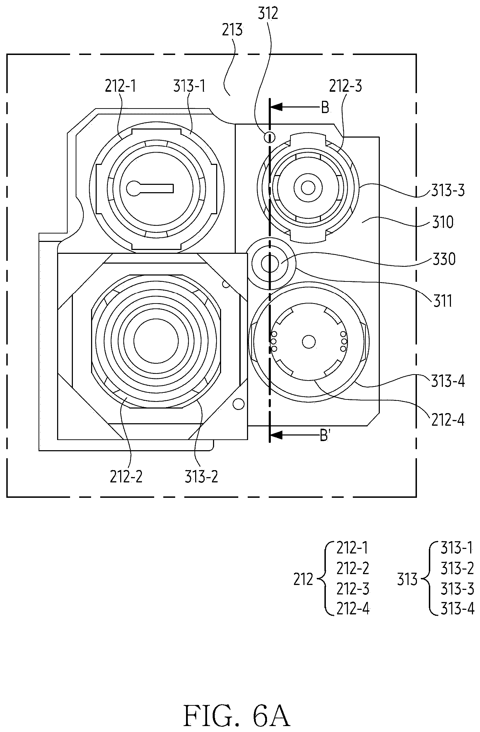

FIG. 6A indicates a camera 212 and a bracket 310 disposed on a printed circuit board 250. FIG. 6B indicates a figure of a screw 330 being inserted. FIG. 6C is a cross-sectional view cut along line B-B' of an electronic device 101 of FIG 6A.

Referring to FIG. 6A, the electronic device 101 according to an embodiment may include a plurality of cameras 212-1, 212-2, 212-3, and 212-4. For example, a camera 212 may include the first camera 212-1, the second camera 212-2, the third camera 212-3, and/or the fourth camera 212-4, but is not limited thereto. A portion of the plurality of cameras 212-1, 212-2, 212-3, and 212-4 may have the same lens property (e.g., an angle of view, a focal length, autofocus, a f number, or an optical zoom), or at least one of the cameras 212-1, 212-2, 212-3, and 212-4 may have one or more lens properties that differ from those of the other cameras.

According to an embodiment, the bracket 310 may surround the camera 212. For example, the bracket 310 may include an opening 313 exposing at least a portion of the camera 212 in a state of surrounding the camera 212. For example, the opening 313 may include a first opening 313-1, a second opening 313-2, a third opening 313-3, and/or a fourth opening 313-4, each corresponding to the cameras 212-1, 212-2, 212-3, and 212-4. The camera 212 may be disposed on a printed circuit board (e.g., the printed circuit board 250 of FIG. 5) disposed on a support 243. The bracket 310 may be covered over the camera 212. To reduce the camera 212 from deviating outside the bracket 310, a size of the opening 313 may be smaller than a size of the camera 212. When the bracket 310 moves, the camera 212 may move together with the bracket 310. A second through hole 311 may be disposed between the plurality of cameras 212-1, 212-2, 212-3, and 212-4.

Referring to FIG. 6B, in a state in which the bracket 310 surrounds the camera 212, the second through hole 311 of the bracket 310 may be aligned with a first through hole 251 of the printed circuit board 250. For example, when the bracket 310 is viewed from above, the first through hole 251 and the second through hole 311 may at least partially overlap.

According to an embodiment, the screw 330 may fasten the printed circuit board 250 on the support 243. For example, in a state in which the bracket 310 is disposed on the printed circuit board 250, the first through hole 251 and the second through hole 311 may be aligned with each other. The screw 330 may be inserted into the first through hole 251 and the second through hole 311, which are aligned with each other, and may be coupled to the support 243. As the screw 330 passes through the first through hole 251 and is coupled to the support 243, the printed circuit board 250 may be fastened on the support 243.

According to an embodiment, the screw 330 may include a first portion 331 and a second portion 332 that are distinguished from each other. For example, in state where the screw 330 is coupled to the support 243, the first portion 331 may be coupled to an inner surface of the first through hole 251 and/or a structure 244 of the support 243. The first portion 331 may pass through the second through hole 311 and may be coupled to the support 243. For example, the first portion 331 may include a screw thread 331a formed on an outer surface of the first portion 331. For example, the screw thread 331a formed on the outer surface of the first portion 331 may be engaged with a screw thread 244a formed in the structure 244. For example, the screw thread 331a may be at least partially coupled to the screw thread 244a of the structure 244. The first portion 331 coupled to the support 243 may fasten the printed circuit board 250 on the support 243. For example, in a state in which the screw 330 is coupled to the support 243, the second portion 332 may extend from the first portion 331 and may be positioned in the second through hole 311. The second portion 332 may be spaced apart from an inner surface 311a of the second through hole 311. For example, a diameter d1 of the second portion 332 may be smaller than a diameter d2 of the second through hole 311. According to an embodiment, the screw 330 may include a flange 333 disposed on the first portion 331 to prevent the bracket 310 from deviating. For example, a length of the second portion 332 may be substantially the same as a length of the second through hole 311, and a diameter d3 of the flange 333 may be greater than the diameter d1 of the second through hole 311. Even when the diameter d1 of the second portion 332 is smaller than the diameter d2 of the second through hole 311, the bracket 310 may not deviate from the printed circuit board 250 by the flange 333 having the diameter d3 greater than the diameter d1 of the second through hole 311. The screw 330 may be inserted into the first through hole 251, the second through hole 311, and/or the support 243.

Referring to FIG. 6C, the bracket 310 may be limitedly movable by a gap g between the second through hole 311 and the second portion 332. The gap g may be referred to as a difference (e.g., d2-d1 of FIG. 6B) in diameter of the second portion 332 and the second through hole 311. "Limitedly movable" may indicate that a moving range of the bracket 310 may be limited by the screw 330 and the gap g. For example, the bracket 310 may not move in a z-axis direction and may be fastened by the screw 330 inserted along the z-axis direction. The first portion 331 may pass through the first through hole 251 and may be coupled to the structure 244 disposed under the first through hole 251. For example, the screw thread 331a of the first portion 331 may engage with at least a portion of the screw thread 244a of the structure 244. The flange 333 may limit the bracket 310 from moving in a -z direction. For example, the bracket 310 may be movable on an xy plane within a range of the gap g spaced between the inner surface 311a of the second through hole 311 and the second portion 332. For example, when the bracket 310 moves along an x axis and/or a y axis, the camera 212 may move together with the bracket 310. The bracket 310 may move within the range of the gap g spaced between the screw 330 and the inner surface 311a of the second through hole 311.

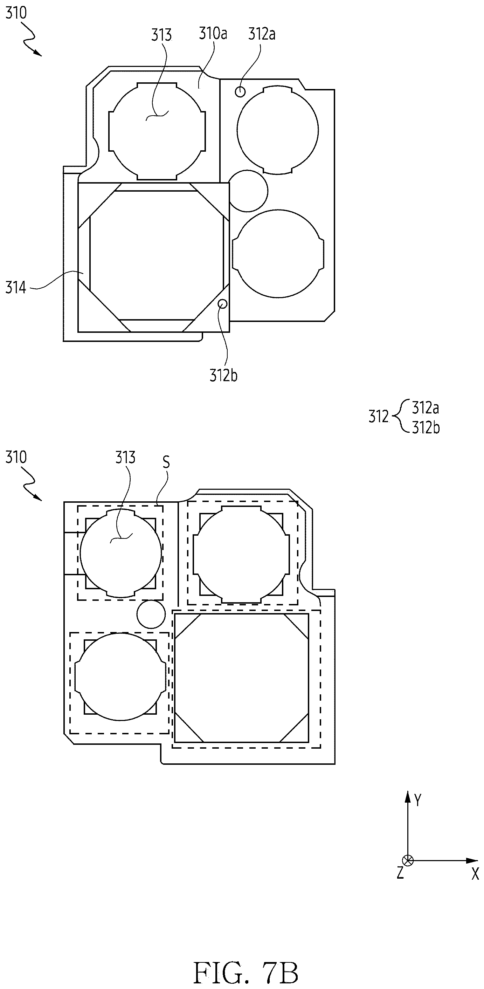

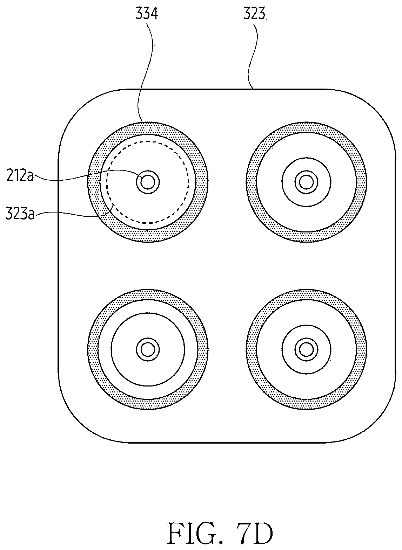

FIG. 7A indicates a figure of a rib 312 being coupled to a guide hole 321. FIG. 7B indicates a bracket 310. FIG. 7C indicates a camera deco 320. FIG. 7D indicates a cover 323 of a camera deco 320.

Referring to FIG. 7A, after a screw 330 is inserted, a first plate 211 may be coupled to a third plate (e.g., the third plate 218 of FIG. 4A). For example, the first plate 211 may be positioned in a -z direction with respect to a camera 212 and the bracket 310. When the first plate 211 is coupled to the third plate 218, the rib 312 may be coupled to the guide hole (e.g., the guide hole 321 of FIG. 7C) of the camera deco 320. For example, the rib 312 may include a first rib 312a and a second rib 312b disposed at different positions on a surface 310a of the bracket 310. The bracket 310 and the camera 212 may be aligned with the camera deco 320 and/or a window 322 via the rib 312.

According to an embodiment, the first plate 211 may be positioned independently of a position of the bracket 310. When the first plate 211 is coupled to the third plate 218, the first plate 211 is not limited to the position of the bracket 310 and may be coupled to the third plate 218 at a designated position for coupling to the third plate 218. For example, the first plate 211 may guide the position of the bracket 310 in a state in which the rib 312 of the bracket 310 and the guide hole 321 of the camera deco 320 are coupled. When the first plate 211 and the third plate 218 are coupled, the position of the bracket 310 may be guided by the first plate 211. A position of the camera deco 320 disposed in the first plate 211 may be changed according to a position of the first plate 211. The bracket 310 may be guided along the position of the camera deco 320 via the rib 312 coupled to the guide hole 321. The bracket 310 may be guided by the first plate 211 within a range of a gap g (e.g., the gap g of FIG. 6C) between the screw 330 and the second through hole 311. As the bracket 310 is guided, the camera 212 moving with the bracket 310 may be aligned with the window 322 of the camera deco 320 even when the position of the first plate 211 is changed. According to an embodiment, by aligning the camera 212 with the window 322, an angle of view of a lens 212a may be aligned with the window 322.

Referring to FIGS. 7A and 7B, the bracket 310 may include the rib 312 and an opening 313. The rib 312 may protrude in a direction (e.g., the -z direction) toward the first plate 211 on a surface 310a of the bracket 310 facing the first plate 211. The bracket 310 may include one or more ribs 312a and 312b for a stable positional relation with the camera deco 320. For example, the bracket 310 may include a first rib 312a and a second rib 312b spaced apart from each other, but is not limited thereto. The rib 312 may provide a positional relation between the bracket 310 and the camera deco 320 by being coupled to the guide hole (e.g., the guide hole 321 of FIG. 7C). The bracket 310 may be guided when the position of the first plate 211 including the camera deco 320 is changed, via the rib 312 coupled to the guide hole 321. The rib 312 may have rigidity for guiding the bracket 310 in a state of being coupled to the guide hole 321.

Referring to FIGS. 7A and 7B, the bracket 310 may include the opening 313 and a partition wall 314. According to an embodiment, the bracket 310 may be coupled with at least a portion of the camera 212. For example, the bracket 310 may be coupled with at least a portion of a shield can 212b. The opening 313 may expose a portion of the surface 310a of the bracket 310 facing the first plate 211. The lens 212a may be configured to obtain external light via the opening 313. The partition wall 314 may couple the camera 212 to the bracket 310 by surrounding the shield can 212b. For example, a space surrounded by the partition wall 314 may correspond to a size of the camera 212, and the camera 212 may be inserted into a space S surrounded by the partition wall 314. For example, a size of the space S surrounded by the partition wall 314 may correspond to a size of the shield can 212b. As the shield can 212b is fitted with interference into the space S, the camera 212 may be coupled to the bracket 310.

Referring to FIGS. 7A, 7C, and 7D, the camera deco 320 may include the guide hole 321, the window 322, and the cover 323. The window 322 may be aligned with a camera (e.g., the camera 212 of FIG. 7A). For example, a center of the window 322 may be aligned with a center of a lens (e.g., the lens 212a of FIG. 7A). The camera deco 320 may include the number of the windows 322 corresponding to the number of the cameras 212. For example, in case that the electronic device 101 includes a plurality of cameras (e.g., the cameras 212-1, 212-2, 212-3, and 212-4 of FIG. 6A), the camera deco 320 may include a first window 322-1, a second window 322-2, a third window 322-3, and/or a fourth window 322-4 each corresponding to the cameras (e.g., the cameras 212-1, 212-2, 212-3, and 212-4 of FIG. 6A). The windows 322-1, 322-2, 322-3, and 322-4 may be aligned with the lens 212a of the cameras 212-1, 212-2, 212-3, and 212-4, respectively.

According to an embodiment, the camera deco 320 may include the guide hole 321. The guide hole 321 may be disposed on a surface 320a of the camera deco 320 facing the inside of a housing 210. For example, the guide hole 321 may be disposed on the surface 320a of the camera deco 320 facing the bracket 310. According to an embodiment, the guide hole 321 may correspond to the rib 312 of the bracket 310. For example, the guide hole 321 may be disposed at a position corresponding to the rib 312. For example, a shape of the guide hole 321 may correspond to a shape of the rib 312 so as to be coupled to the rib 312. For example, the number of the guide holes 321 may correspond to the number of the ribs 312. For example, the guide hole 321 may include a first guide hole 321a corresponding to the first rib 312a and a second guide hole 321b corresponding to the second rib 312b.

According to an embodiment, after the bracket 310 is disposed on the printed circuit board 250, the guide hole 321 may be coupled to the rib 312. The guide hole 321 and the rib 312 coupled to each other may provide the positional relation between the camera deco 320 and the bracket 310. The first plate 211 in which the camera deco 320 is disposed may guide the position of the bracket 310 via the guide hole 321 and the rib 312.

Referring to FIG. 7D, the cover 323 may cover the lens 212a aligned with the window 322. For example, the cover 323 may be disposed on a surface (e.g., the surface 320b of FIG. 7C) of the camera deco 320 facing the outside of the housing 210. For example, the cover 323 may be disposed in the window 322 of the camera deco 320. The cover 323 may be configured to transmit light to be incident on the lens 212a. For example, the cover 323 may be substantially transparent. For example, the cover 323 may be referred to as cover glass, but is not limited thereto.

According to an embodiment, the cover 323 may include a print region 334. The print region 334 may be referred to as a visual mark displayed on the cover 323 so that a center of the lens 212a may be identified. For example, the print region 334 may be spaced apart from a region 323a of the cover 323 corresponding to the lens 212a and may surround a periphery of the region 323a. The region may be referred to as a region in which the lens 212a and the cover 323 aligned with each other overlap when viewed from above from the camera deco 320 in which the cover 323 is disposed. The print region 334 may be spaced apart from the region by a predetermined distance and may be disposed to surround a periphery of the region. A center of the print region 334 may be aligned with a center of the lens 212a. For example, when viewed from above from the camera deco 320 in which the cover 323 is disposed, the center of the print region 334 and the center of the lens 212a may overlap each other. According to an embodiment, a user may identify whether an angle of view of the lens 212a is aligned with the window 322 by visually identifying that the center of the print region 334 and the center of the lens 212a coincide with each other. For example, in case that the center of the print region 334 and the center of the lens 212a are aligned, the angle of view of the lens 212a may be identified as being aligned with the window 322. For example, in case that the center of the print region 334 and the center of the lens 212a are not aligned and misaligned, the angle of view of the lens 212a may be identified as being not aligned (e.g., eccentricity of the angle of view) with the window 322.

An electronic device 101 according to an embodiment may have the positional relation between the bracket 310 and the camera deco 320 via the rib 312 and the guide hole 321 coupled to each other. Since the bracket 310 may move within a spaced distance between the screw 330 and the inner surface 311a of the second through hole 311, the position of the bracket 310 may be guided. The camera 212 may be coupled to the bracket 310 and move together with the bracket 310, and the camera deco 320 may be disposed in the first plate 211. According to an embodiment, the positional relation between the bracket 310 and the camera deco 320 may provide a positional relation between the first plate 211 and the camera 212. Since the first plate 211 and the camera 212 are positionally related to each other, the camera 212 may be aligned with the window 322 of the camera deco 320 in a process of assembling the electronic device 101. According to an embodiment, the angle of view of the lens 212a may be aligned with the window 322 of the camera deco 320. The electronic device 101 according to an embodiment may reduce eccentricity of the angle of view due to an assembly tolerance and/or a dimensional tolerance, and improve a quality of an exterior.

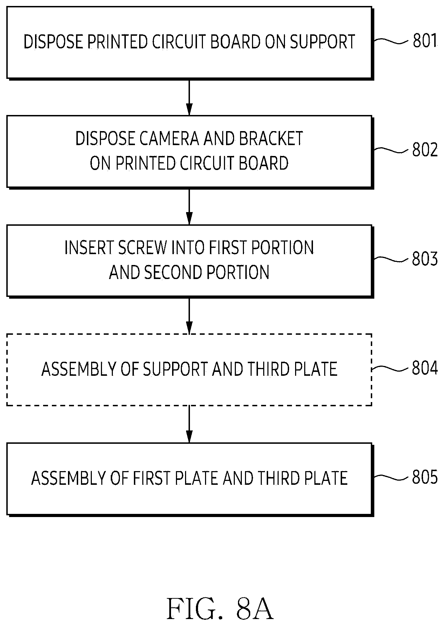

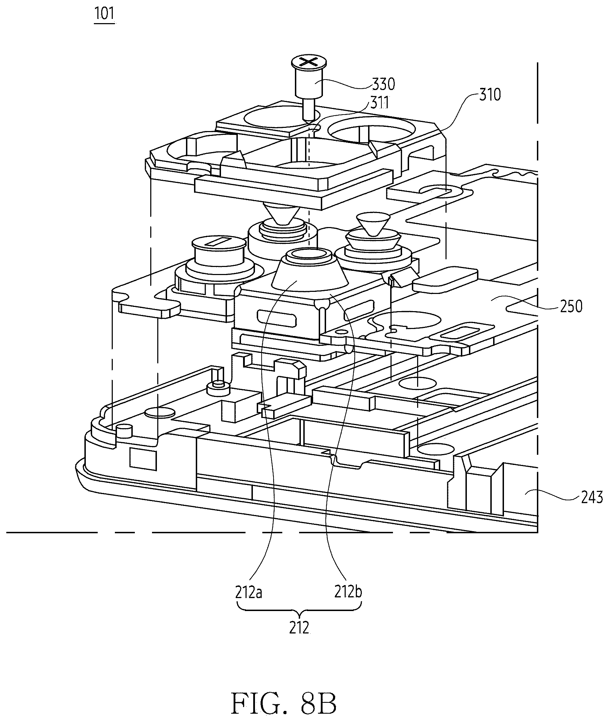

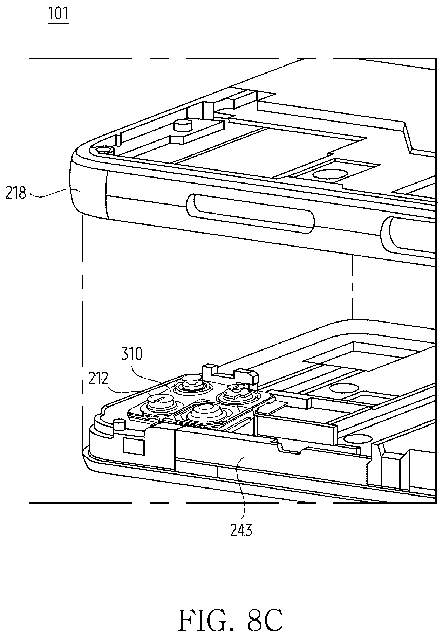

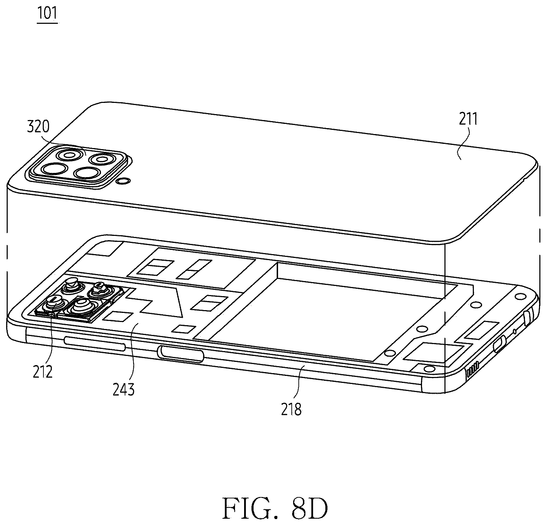

FIG. 8A is a flowchart indicating an assembly process of an electronic device 101. FIGS. 8B, 8C, and 8D indicate an exemplary electronic device 101 in the assembly process of FIG. 8A.

The electronic device 101 according to an embodiment may align a camera 212 with a window 322 of a camera deco 320 corresponding to the camera 212 in an assembly process via a positional relation between a first plate 211 and the camera 212. During the assembly process, the camera 212 may not be positionally related to a third plate 218 and may be positionally related to a first plate 211. As the camera 212 is aligned to the window 322 of the camera deco 320, eccentricity of an angle of view of a lens 212a may be reduced. The first plate 211 is not limited to a position of the camera 212 or a bracket 310 and is coupled to the third plate 218 at a designated position, so that an assembly tolerance may be reduced.

Referring to FIG. 8A, in operation 801, a printed circuit board 250 may be disposed on a support 243. Referring to FIG. 8B, the printed circuit board 250 may not be coupled to the support 243 and may be placed at a designated position on the support 243.

In operation 802, the camera 212 and the bracket 310 may be disposed on the printed circuit board 250. Referring to FIG. 8B, the camera 212 may include the lens 212a and a shield can 212b. The camera 212 may be disposed on the printed circuit board 250, and the bracket 310 may be covered on the camera 212. The bracket 310 may be coupled to the camera 212 by being coupled to the shield can 212b. For example, the shield can 212b may be coupled to the bracket 310 in an interference fit manner, but is not limited thereto. In the operation 802, the camera 212 and the bracket 310 may not be coupled to the printed circuit board 250.

In operation 803, a screw 330 may be inserted into a first through hole 251 and a second through hole (e.g., the through hole 311 of FIG. 5). Referring to FIG. 8B, the screw 330 may be inserted from the second through hole 311 of the bracket 310 to the first through hole 251 of the printed circuit board 250. The screw 330 may pass through the first through hole 251 and may be coupled to the support 243. According to an embodiment, the screw 330 may be coupled to the first through hole 251 and may be spaced apart from an inner surface 311a of the second through hole 311. The printed circuit board 250 may be fastened on the support 243 via the screw 330. The bracket 310 and the camera 212 may be movable within a range of a gap g between the screw 330 and the second through hole 311.

In operation 804, the support 243 and the third plate 218 may be assembled. Referring to FIG. 8C, the third plate 218 may form a side surface of a housing 210. The third plate 218 may be coupled to the support 243 independently of the bracket 310 and the camera 212. For example, the third plate 218 may be assembled with the support 243 without a positional relation with the camera 212 and the bracket 310. However, it is not limited thereto, and the operation 804 may be omitted according to a shape of the support 243 and the third plate 218. For example, the third plate 218 may be integrally formed with the support 243 other than being a component independent of the support 243. For example, the support 243 and the third plate 218 may be integrally formed by a single process. In case that the support 243 and the third plate 218 are integrally formed, the operation 804 may be omitted.

In operation 805, the first plate 211 and the third plate 218 may be assembled. Referring to FIG. 8D, the first plate 211 may cover the support 243 by being coupled to the third plate 218. When the first plate 211 is coupled to the third plate 218, the window 322 of the camera deco 320 disposed in the first plate 211 may be aligned with the camera 212. For example, a rib (e.g., the rib 312 of FIG. 7B) of the bracket 310 may be coupled to a guide hole (e.g., the guide hole 321 of FIG. 7C) of the camera deco 320. In a state in which the rib 312 and the guide hole 321 are coupled, the first plate 211 may guide a position of the bracket 310. For example, when a position of the first plate 211 is changed, a position of the camera deco 320 disposed in the first plate 211 may be changed. The position of the bracket 310 may be guided along the camera deco 320 via the rib 312. Since the camera 212 moves together with the bracket 310, the camera 212 may be aligned with the window 322 of the camera deco 320. According to an embodiment, since the first plate 211 and the camera 212 are positionally related to each other, the camera 212 may be aligned with the window 322 of the camera deco 320 in the process of assembling the electronic device 101.

According to an embodiment, an electronic device (e.g., the electronic device 101 of FIG. 4A) may comprise a support (e.g., the support 243 of FIG. 4B), a plate (e.g., the first plate 211 of FIG. 4B), a printed circuit board (PCB) (e.g., the printed circuit board 250 of FIG. 4B), a camera (e.g., the camera 212 of FIG. 4B), a bracket (e.g., the bracket 310 of FIG. 4B), a camera deco (e.g., the camera deco 320 of FIG. 4B), and a screw (e.g., the screw 330 of FIG. 4B). The plate may be spaced apart from a surface (e.g., the surface 243a of FIG. 4B) of the support. The printed circuit board (PCB) may include a first through hole (e.g., the first through hole 251 of FIG. 5). The printed circuit board (PCB) may be disposed on the surface of the support. The camera may be disposed on the printed circuit board. The bracket may at least partially surround the camera on the PCB. The bracket may include a second through hole (e.g., the second through hole 311 of FIG. 4B) and a rib (e.g., the rib 312 of FIG. 4B). The second through hole may aligned with the first through hole of the PCB. The rib may protrude toward the plate. The camera deco may include a guide hole (e.g., the guide hole 321 of FIG. 5) and a window (e.g., the window 323 of FIG. 5). The guide hole may be coupled to the rib of the bracket. The window may align with the camera. The camera deco may be disposed to cover the camera in the plate. The screw may pass through the first through of the PCB from the second through hole of the bracket. The screw may couple the bracket on the PCB by being coupled to the support. An outer surface of the screw may be spaced apart from an inner surface (e.g., the inner surface 311a of FIG. 5) of the second through hole of the bracket. According to an embodiment of the present disclosure, the bracket may be movable within a range of a gap between the screw and the second through hole in a state of surrounding the camera. According to an embodiment, the first plate may guide a position of the camera so that the camera is aligned with the window of the camera deco. Since the rib of the bracket is coupled to the guide hole of the camera deco, the camera deco may guide the position of the bracket. For example, when a position of the first plate is changed, the position of the bracket is guided via the rib, and the camera surrounded by the bracket may move together with the bracket. An angle of view of a lens may be aligned with the window of the camera deco by a positional relation between the bracket and the camera deco. The electronic device according to an embodiment may reduce eccentricity of the angle of view due to an assembly tolerance and/or a dimensional tolerance, and improve a quality of an exterior.

According to an embodiment, the plate may be configured to align the camera with respect to the window on the PCB via a rib of the bracket coupled to the guide hole of the camera deco and a gap g (e.g., the gap g of FIG. 5) between the screw and the inner surface of the second through hole of the bracket.

According to an embodiment, the plate may be configured to guide a position of the bracket via the rib of the bracket coupled to the guide hole of the camera deco. According to an embodiment of the present disclosure, the bracket may be movable via the gap between the screw and the second through hole. Since the bracket has a positional relation with the camera deco, the position of the bracket may be guided by the first plate via the rib. According to an embodiment, since the bracket may move together with the camera, the camera may be aligned with to the window of the camera deco. For example, the angle of view of the lens may be aligned with the window of the camera deco.

According to an embodiment, the bracket may be configured to move within a range of the spaced gap between the screw and the inner surface of the second through hole of the bracket.

According to an embodiment, the gap between the outer surface of the screw and the inner surface of the second through hole of the bracket may be substantially constant. According to an embodiment of the present disclosure, since a portion of the screw is spaced apart from the second through hole, the bracket may be movable within a range of the gap between the second through hole and the screw. By disposing the bracket to move within a certain range, the position of the camera may be adjusted. According to an embodiment, the camera may be guided to be aligned with the window of the camera deco.

According to an embodiment, the screw may include a first portion (e.g., the first portion 331 of FIG. 6B) and a second portion (e.g., the second portion 332 of FIG. 6B). The first portion may be at least partially positioned in the first through hole of the PCB. The second portion may extend from the first portion of the screw. The second portion may be positioned in the second through hole of the bracket.

According to an embodiment, the first portion of the screw may fasten the printed circuit board on the support by passing through the first through hole of the PCB and being coupled to the support.

According to an embodiment, the support may include a structure (e.g., the structure 244 of FIG. 6B) including a screw thread (e.g., the screw thread 244a of FIG. 5) coupled to a screw thread of the first portion (e.g., the screw thread 331a of FIG. 5) of the screw.

According to an embodiment, a diameter (e.g., the diameter d1 of FIG. 6B) of the second portion of the screw may be smaller than a diameter (e.g., the diameter d2 of FIG. 6B) of the second through hole of the bracket. According to an embodiment of the present disclosure, the first portion of the screw may be coupled to the first through hole and/or the support. The printed circuit board may be fastened on the support by the first portion. According to an embodiment, since the second portion of the screw may be spaced apart from the inner surface of the second through hole in the second through hole, the bracket may be movable within a certain range.

According to an embodiment, the camera may include a lens (e.g., the lens 212a of FIG. 4B) aligned with the window and a shield can (e.g., the shield can 212b of FIG. 4B). The shield can may at least partially surround the lens. The bracket may be coupled to the camera by being coupled to at least a portion of the shield can. According to an embodiment of the present disclosure, the shield can may protect the lens by surrounding the lens. The bracket may be coupled to the camera by being coupled to at least a portion of the shield can. For example, the bracket may include a partition wall forming a space for inserting the shield can. The space surrounded by the partition wall may correspond to a size of the shield can. The bracket and the camera may be coupled by inserting the shield can into the space. According to an embodiment, the bracket may move together with the camera.

According to an embodiment, the camera may include a lens aligned with the window and a shield can. The shield can may at least partially surround the lens. The camera deco may include a cover (e.g., the cover 323 of FIG. 5). The cover may cover the lens.

According to an embodiment, the plate may align an angle of view of the lens with respect to the window, by guiding a position of the bracket. According to an embodiment of the present disclosure, a positional relation between the camera deco and the bracket may provide a positional relation between the first plate and the camera. The first plate may align the angle of view of the lens with respect to the window by guiding the camera.

According to an embodiment, the cover may include a print region (e.g., the print region 334 of FIG. 7D). The print region may be spaced apart from a region of the cover corresponding to the lens and may surround a periphery of the region of the cover. A center of the print region may be aligned with a center of the lens. According to an embodiment, a user may identify whether the angle of view of the lens is aligned with the window of the camera deco by visually identifying that the center of the print region and the center of the lens coincide with each other. For example, in case that the center of the print region and the center of the lens are aligned, the angle of view of the lens may be identified as being aligned with the window.

According to an embodiment, the electronic device may further comprise a second plate (e.g., the second plate 202 of FIG. 3). The second plate may be opposite to the first plate, which is the plate. The camera may face in a direction from the second plate to the first plate. According to an embodiment of the present disclosure, the camera may be referred to as a rear camera, and the plate may be referred to as a rear cover. The camera may include a plurality of cameras. The plurality of cameras may be aligned with the window of the camera deco by being surrounded by the bracket.

According to an embodiment, the electronic device may further comprise a second plate and a third plate. The second plate may be opposite to the first plate, which is the plate. The third plate may surround the support. The third plate may be coupled to the first plate. The bracket may align the camera with respect to the window of the camera deco on the printed circuit board via the rib of the bracket coupled to the guide hole of the camera deco and a gap between the screw and the second through hole of the bracket, when the first plate is coupled to the third plate.

According to an embodiment, an electronic device (e.g., the electronic device 101 of FIG. 4A) may comprise a housing (e.g., the housing 210 of FIG. 4B), a printed circuit board (e.g., the printed circuit board 250 of FIG. 4B), a camera (e.g., the camera 212 of FIG. 4B), a camera deco (e.g., the camera deco 320 of FIG. 4B), a bracket (e.g., the bracket 310 of FIG. 4B), and a screw (e.g., the screw 330 of FIG. 4B). The housing may include a support (e.g., the support 243 of FIG. 4B). The PCB may include a first through hole (e.g., the first through hole 251 of FIG. 5). The PCB may be disposed on the support. The camera may be disposed on the PCB. The camera deco may include a guide hole (e.g., the guide hole 321 of FIG. 5) and a window (e.g., the window 322 of FIG. 5). The window may align with the camera. The camera deco may cover the camera. The bracket may include a second through hole (e.g., the second through hole 311 of FIG. 4B) and a rib (e.g., the rib 312 of FIG. 4B). The second through hole may align with the first through hole of the PCB. The rib may be coupled to the guide hole. The bracket may surround the camera on the PCB. The screw may include a first portion (e.g., the first portion 331 of FIG. 6B) and a second portion (e.g., the second portion 332 of FIG. 6B). The first portion may be positioned in the first through hole of the PCB. The second portion may extend from the first portion of the screw. The second portion may be positioned in the second through hole. The first portion may pass through the first through hole of the PCB and may be coupled to a structure (e.g., the structure 244 of FIG. 5) of the support. A diameter (e.g., the diameter d1 of FIG. 6B) of the second portion may be smaller than a diameter (e.g., the diameter d2 of FIG. 6B) of the second through hole. According to an embodiment of the present disclosure, the bracket may be movable within a range of a gap between the second portion of the screw and the second through hole in a state of surrounding the camera. The bracket may be fastened on the printed circuit board by the first portion. According to an embodiment, the first plate may guide a position of the camera so that the camera is aligned with the window of the camera deco. Since the rib of the bracket is coupled to the guide hole of the camera deco, the camera deco may guide a position of the bracket. For example, when a position of the first plate is changed, a position of the bracket is guided via the rib, and the camera surrounded by the bracket may move together with the bracket. An angle of view of the lens may be aligned with the window of the camera deco by a positional relation between the bracket and the camera deco. According to an embodiment, the electronic may reduce eccentricity of the angle of view due to an assembly tolerance and/or a dimensional tolerance, and improve a quality of an exterior.

According to an embodiment, the electronic device may further comprise a plate (e.g., the first plate 211 of FIG. 4B). The plate may be spaced apart from the support. The camera deco may be disposed in the plate. The plate may be configured to align the camera with respect to the window on the PCB via the rib coupled to the guide hole of the camera deco and a gap between the screw and an inner surface of the second through hole.

According to an embodiment, the plate may be configured to guide a position of the bracket, via the rib coupled to the guide hole of the camera deco. According to an embodiment of the present disclosure, the bracket may be movable through the gap between the screw and the second through hole. Since the bracket has a positional relationship with the camera deco via the rib, the position of the bracket may be guided by the first plate. According to an embodiment, since the bracket may move together with the camera, the camera may be aligned with the window of the camera deco, which corresponds to the camera. The angle of view of the lens may be aligned with the window of the camera deco.

According to an embodiment, the gap between the second portion of the screw and the inner surface of the second through hole may be substantially constant. According to an embodiment of the present disclosure, the gap between the second portion and the second through hole may allow the bracket to be moved within the range of the gap. Since the bracket is movable within the range of the gap, the camera and the window of the camera deco may be aligned with each other.

According to an embodiment, the first portion may include a screw thread (e.g., the screw thread 331a of FIG. 6B) coupled to a screw thread (e.g., the screw thread 244a of FIG. 6B) of the structure. According to an embodiment of the present disclosure, the first portion may fasten the printed circuit board on the support by being coupled to the support. The printed circuit board may be fastened at a designated position by the first portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a support (243);
a plate (211) spaced apart from a surface (243a) of the support (243);
a printed circuit board (PCB) (250), including a first through hole (251), disposed on the surface (243a) of the support (243);
a camera (212) disposed on the PCB (250);
a bracket (310) at least partially surrounding the camera (212) on the PCB (250), the bracket (310) including:
a second through hole (311) aligned with the first through hole (251), and
a rib (312) protruding toward the plate (211);
a camera deco (320) disposed to cover the camera (212) in the plate (211), the camera deco (320) including:
a guide hole (321) coupled to the rib (312), and
a window (322) aligned with the camera (212); and
a screw that couples the bracket (310) to the PCB (250) by passing through the first through hole (251) from the second through hole (311) and being coupled to the support (243),
wherein an outer surface of the screw (330) is spaced apart from an inner surface (311a) of the second through hole (311).

2. The electronic device of claim 1,
wherein the plate (211) aligns the camera (212) with respect to the window (322) on the PCB (250), via the rib (312) coupled to the guide hole (321) and a gap (g) between the screw (330) and the inner surface (311a) of the second through hole (311).

3. The electronic device of any one of claim 1 or 2,
wherein the plate (211) guides a position of the bracket (310), via the rib (312) coupled to the guide hole (321) of the camera deco (320).

4. The electronic device of any one of claims 1 to 3,
wherein the bracket (310) moves within a range of the gap (g) between the screw (330) and the inner surface (311a) of the second through hole (311).

5. The electronic device of any one of claims 1 to 4,
wherein the gap (g) between the outer surface of the screw (330) and the inner surface (311a) of the second through hole (311) is constant.

6. The electronic device of any one of claims 1 to 5,
wherein the screw (330) includes:
a first portion (331) at least partially positioned in the first through hole (251), and
a second portion (332), extending from the first portion (331), positioned in the second through hole (311).

7. The electronic device of any one of claims 1 to 6,
wherein the first portion (331) fastens the PCB (250) to the support (243), by passing through the first through hole (251) and being coupled to the support (243).

8. The electronic device of any one of claims 1 to 7,
wherein the support (243) includes a structure (244) including a screw thread (244a) coupled to a screw thread (331a) of the first portion (331).

9. The electronic device of any one of claims 1 to 8,
wherein a diameter of the second portion (332) is smaller a diameter of the second through hole (311).

10. The electronic device of any one of claims 1 to 9,
wherein the camera includes:
a lens (212a) aligned with the window (322), and
a shield can (212b) at least partially the lens (212a), and
wherein the bracket (310) is coupled to the camera (212), by being coupled to at least portion of the shield can (212b).

11. The electronic device of any one of claims 1 to 10,
wherein the camera includes:
a lens (212a) aligned with the window (322), and
a shield can (212b) at least partially the lens (212a), and
wherein the camera deco (320) includes a cover (323) covering the lens (212a).

12. The electronic device of any one of claims 1 to 11,
wherein the plate aligns an angle of view of the lens (212a) with respect to the window, by guiding a position of the bracket (310).

13. The electronic device of any one of claims 1 to 12,
wherein the cover including a print region (334) spaced apart from a region of the cover corresponding to the lens (212a) and surrounding a periphery of the region of the cover, and
wherein a center of the print region (334) is aligned with a center of the lens (212a).

14. The electronic device of any one of claims 1 to 13, further comprising a second plate (202) opposite to the first plate (211), which is the plate (211),
wherein the camera (212) faces in a direction from the second plate (202) to the first plate (211).

15. The electronic device of any one of claims 1 to 14, further comprising:
a second plate (202) opposite to the first plate (211), which is the plate (211); and
a third plate (218), surrounding the support (243), coupled to the first plate (211),
wherein the bracket (310) aligns the camera (212) with respect to the camera deco (320) on the PCB (250), via the rib (312) coupled to the guide hole (321) and a gap (g) between the screw (330) and the second through hole (311), when the first plate (211) is coupled to the third plate (218).
